# EUROPÄISCHE PATENTSCHRIFT

(11) **EP 2 847 136 B1**
(45) Veröffentlichungstag und Bekanntmachung des Hinweises auf die Patenterteilung: **14.09.2016**
(21) Anmeldenummer: 13727029.4
(22) Anmeldetag: 07.05.2013
(51) Int. Cl.: C02F 3/20, B01F 3/04

(54) **BEFESTIGUNG EINES STREIFENBELÜFTERS**
SECURING OF A STRIP DIFFUSER
SYSTÈME DE FIXATION D'UN AÉRATEUR À BANDE

(30) Priorität: 07.05.2012 DE 102012009283
(43) Veröffentlichungstag der Anmeldung: 18.03.2015
(73) Patentinhaber: Arnold Jäger Holding GmbH, 30625 Hannover (DE)
(72) Erfinder: DOPPLER, Roland, 2500 Baden (AT); JÄGER, Andreas, 30559 Hannover (DE)
(74) Vertreter: Bremer, Ulrich
(86) Internationale Anmeldenummer: PCT/DE2013/000249
(87) Internationale Veröffentlichungsnummer: WO 2013/167108

(56) Entgegenhaltungen:
- WO-A2-2009/132374
- AT-B- 413 380
- DE-U1-202005 005 693

## Beschreibung

### Die vorliegende Erfindung betrifft eine Befestigung eines Streifenbelüfters am Boden eines Klärbeckens gemäß dem Oberbegriff des Anspruchs 1.

Eine derartige Befestigung eines Streifenbelüfters ist aus der AT 413 380 B bekannt. Der Streifenbelüfter weist an seinen Längsrändern jeweils einen Fußbereich auf, der mit einem L-förmig zur Mitte des Streifenbelüfters hin abgewinkelten Fußflansch endet. Zur Befestigung des Streifenbelüfters am Klärbeckenboden ist eine Befestigungsplatte vorgesehen, deren Breite größer ist als die Breite des Streifenbelüfters. Bei der Befestigungsplatte handelt es sich um einen schmalen Blechstreifen, in dessen über die Breite des Streifenbelüfters hinausgehenden Bereichen jeweils ein Langloch eingebracht ist, über das die Befestigungsplatte, z. B. durch Verschraubung, mit dem Klärbeckenboden verbunden werden kann. Die Befestigungsplatte weist darüber hinaus zu den Fußflanschen des Streifenbelüfters komplementäre Eingriffsflansche auf. Diese sind durch Ausstanzen und Ausbiegen aus dem Blechstreifen hergestellt.

Die aus der AT 413 380 B bekannten Befestigungsplatten sind als sogenannte Eindrehprofile ausgeführt. Derartige Profile können nicht gerade auf die Fußflansche des Streifenbelüfters aufgeschoben werden, da die Eingriffsflansche so konzipiert sind, dass sie in den Fußflanschen verklemmen. Um ein solches Verklemmen zu erreichen, werden die Eingriffsflansche unter Schrägstellung der Befestigungsplatte in die Fußflansche eingeschoben. Wenn die gewünschte Befestigungsstelle, bezogen auf die Länge des Streifenbelüfters, erreicht ist, wird die Befestigungsplatte gerade gestellt, d. h. bezogen auf die Längsachse des Streifenbelüfters in einen etwa rechten Winkel zu dieser gedrückt. Bei diesem Geradedrücken der Befestigungsplatte laufen die Enden der Eingriffsflansche auf den Grund der Fußflansche auf und verklemmen an diesem. Ein derartiges Verdrehen der Befestigungsplatte und ein derartiges Verklemmen der Eingriffsflansche ist dadurch möglich, dass die Eingriffsflansche in Längsrichtung des Streifenbelüf-ters gesehen sehr kurz ausgeführt sind. Um ein Verklemmen der Eingriffsflansche am Grund der Fußflansche zu erleichtern, sind die in Verdrehrichtung vorn liegenden Ecken der Eingriffsflansche abgerundet.

Die oben beschriebene aus dem Stand der Technik bekannte Befestigung eines Streifenbelüfters am Boden eines Klärbeckens hat verschiedene Nachteile. So ist es aufgrund der Ausführung der Befestigungsplatte als Eindrehprofil zum einen schwierig, bei der Montage der Befestigungsplatte am Streifenbelüfter, bezogen auf dessen Länge, den gewünschten Anbringungsort genau zu treffen. Ggf. muss dazu die Befestigungsplatte mehrmals aus ihrer bzw. in ihre Klemmstellung gedreht werden. Des Weiteren kann diese bekannte Befestigungsplatte nicht zur gleichzeitigen Befestigung von zwei in einer Belüfterkette aufeinanderfolgenden Streifenbelüftern verwendet werden.

Eine weitere Befestigung eines Streifenbelüfters ist in der EP 0 586 329 A1 beschrieben. Der Streifenbelüfter ist dabei zwischen zwei Querträgern angeordnet, wobei an den Längsseiten der Querträger Haken und Schnellverschlüsse angeordnet sind, die ineinander eingreifen. Beim Verschließen der Schnellverschlüsse wird der Streifenbelüfter zwischen den Querträgern verklemmt. Der untere Querträger ist dabei Teil einer Bodenplatte, die zur Auflage auf dem Boden z.B. eines Klärbeckens gedacht ist.

Die US 8,002,249 B2 zeigt einen Streifenbelüfter, der gemäß einer Ausführungsform seitliche Stege aufweist, die in Klemmen aufgenommen sind, wobei die Klemmen an auf dem Boden aufliegenden Ständern befestigt sind. Dadurch kann der Streifenbelüfter seitlich verklemmt auf dem Boden eines Klärbeckens befestigt werden.

WO 2009/132374 offenbart eine Vorrichtung entsprechend dem Oberbegriff des Anspruchs 1.

Aufgabe der vorliegenden Erfindung ist es, eine Befestigung eines Streifenbelüfters zur Verfügung zu stellen, mit der die o. g. Nachteile beseitigt sind.

Erfindungsgemäß wird diese Aufgabe mit einer Befestigung eines Streifenbelüfters am Boden eines Klärbeckens gelöst, die die Merkmale des Anspruchs 1 aufweist.

Erfindungsgemäß ist also die Befestigungsplatte nicht als Eindrehprofil, wie aus dem Stand der Technik bekannt, konzipiert, sondern als Einsteckprofil. Diese Ausführung macht es möglich, die Befestigungsplatte, insbesondere die Eingriffsflansche, so lang auszuführen, dass der Abstand zwischen zwei in einer Belüfterkette aufeinanderfolgenden Streifenbelüftern überbrückt werden kann. Aufgrund der damit relativ großen Länge der Befestigungsplatte bzw. der Eingriffsflansche kann sich der Streifenbelüfter im Betrieb nicht mehr aus der Befestigungsplatte herausdrehen. Es ist daher nicht mehr ein Kraftschluss zwischen den Eingriffsflanschen und den Fußflanschen erforderlich, sondern ein Formschluss ist ausreichend. Damit ist eine sichere Befestigung des Streifenbelüfters am Klärbeckenboden gewährleistet.

In weiterer Ausgestaltung der Erfindung wird der Formschluss zwischen den Eingriffsflanschen und den Fußflanschen noch dadurch sicherer, indem zusätzlich zu den Eingriffsflanschen an der Befestigungsplatte senkrecht abragende Außenstege vorgesehen sind, die bei montierter Befestigungsplatte an den Außenseiten des jeweilig zugeordneten Längsrandes des Streifenbelüfters anliegen. Zudem verbessern diese Außenstege die Führung der Befestigungsplatte beim Einschieben in die Fußflansche.

In vorteilhafter Ausgestaltung der Erfindung ist die Befestigungsplatte aus Kunststoff im Spritzguss- oder Extrusionsverfahren hergestellt.

Die Erfindung wird nachstehend anhand eines Ausführungsbeispiels näher erläutert. In der dazugehörigen Zeichnung zeigt:
- Fig. 1: einen perspektivischen Blick auf zwei in einer Belüfterkette aufeinanderfolgende Streifenbelüfter,

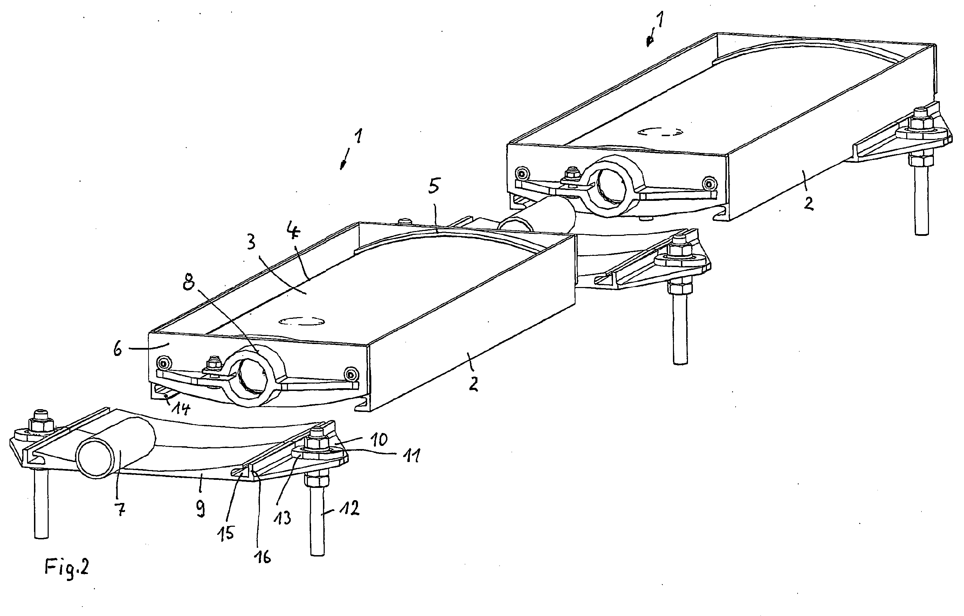

- Fig. 2: eine Explosionsdarstellung von Fig. 1, und

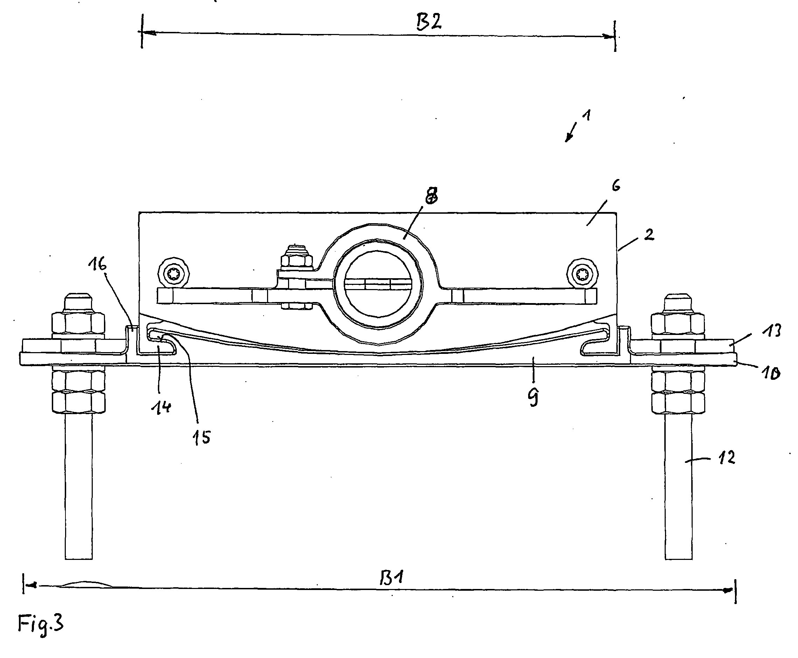

- Fig. 3: eine Stirnansicht eines Streifenbelüfters bei montierter Befestigungsplatte.

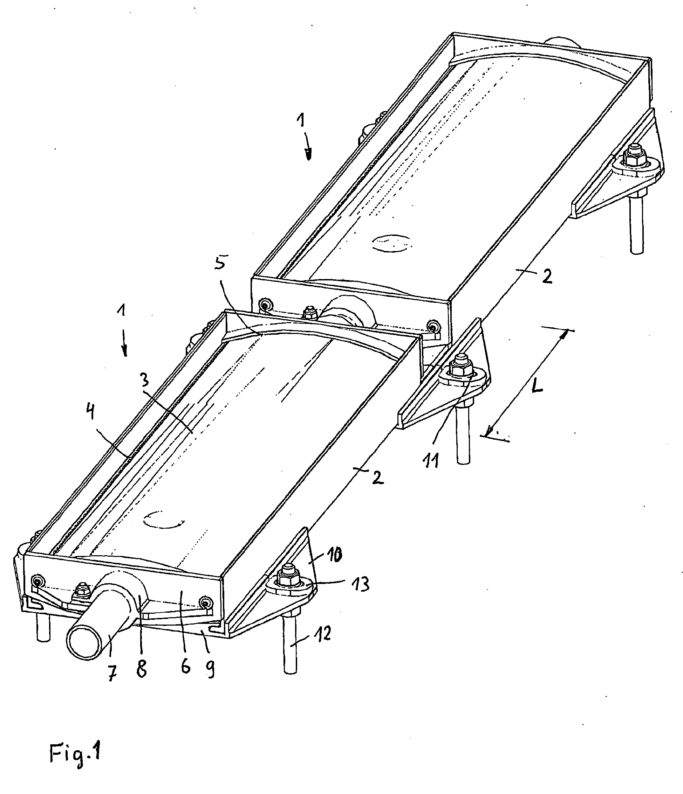

Die in Fig. 1 dargestellten Streifenbelüfter 1 sind identisch aufgebaut. Sie weisen einen Hohlprofilkörper 2 auf, der aus Kunststoff im Extrusionsverfahren hergestellt ist. Der Hohlprofilkörper 2 besitzt eine Oberwand 3, die der Abstützung einer aus der Zeichnung nicht ersichtlichen porösen Membran dient. Diese Membran ist an den Längsrändern 4 des Hohlprofilkörpers 2 durch aus der Zeichnung nicht ersichtliche Klemmprofile gasdicht festgelegt, und an den Stirnrändern 5 durch eine an die Stirnseite des Hohlprofilkörpers 2 angeschraubte Verschlussplatte 6 gasdicht auf der Oberwand festgelegt. Der Hohlprofilkörper 2 dient darüber hinaus der Gaszufuhr in einen zwischen der Membran und der Oberwand 3 gebildeten Zwischenraum. Aufgrund dieser Gaszufuhr hebt die Membran von der Oberwand 3 des Hohlprofilkörpers 2 ab, wodurch sich die Poren der Membran öffnen und das eingeführte Druckgas feinblasig in die zu behandelnde Flüssigkeit eintreten kann. Zur Absperrung der Gaszufuhr legt sich die Membran wieder an die Oberwand des Hohlprofilkörpers 2 an, wodurch die Poren verschlossen werden.

Die Gaszufuhr in den Hohlprofilkörper 2 erfolgt über Rohre 7, die jeweils in einem klemmbackenartig ausgeführten Rohrstutzen 8, der einstückig mit der Verschlussplatte 6 ausgeführt ist, gasdicht verklemmt sind. Die Rohre 7 verbinden die Streifenbelüfter 1 einer Belüfterkette unter Belassung eines Abstandes miteinander.

Um die auf die Streifenbelüfter 1 im Betrieb wirkende Kräfte abfangen zu können, müssen diese sicher an einem nicht dargestellten Boden eines Klärbeckens befestigt werden. Für diese Befestigung sind Befestigungsplatten 9 vorgesehen.

Die in dem Ausführungsbeispiel dargestellten Befestigungsplatten 9 sind im Spritzgussverfahren aus Kunststoff hergestellt. Sie können bei entsprechender Konstruktion aber auch als Extrusionsprofile hergestellt werden. Die Befestigungsplatten 9 besitzen eine Breite B1, die größer als die Breite B2 der Streifenbelüfter 1 ist. In ihren über die Breite B2 des Streifenbelüfters 1 hinausgehenden flanschartigen Bereichen 10 weisen die Befestigungsplatten 9 Langlöcher 11 auf, die der Verschraubung der Befestigungsplatten 9 mit im Klärbeckenboden verankerten Schraubenbolzen 12 dienen. Im Bereich der Langlöcher 11 sind die flanschartigen Bereiche 10 durch einen einstückig mit diesen ausgebildeten Bund 13 verstärkt.

Die Streifenbelüfter 1 weisen an ihren Längsrändern jeweils einen Fußbereich auf, der mit einem L-förmig zur Mitte des Streifenbelüfters abgewinkelten Fußflansch 14 endet. Diese Fußflansche 14 dienen der Verbindung des Streifenbelüfters 1 mit den Befestigungsplatten 9. Diese weisen dazu zu den Fußflanschen 14 komplementäre Eingriffsflansche 15 auf, deren Länge der Länge L der Befestigungsplatte 9 entspricht. Zur Außenseite hin sind die Eingriffsflansche 15 durch senkrecht von der Befestigungsplatte 9 abragende Außenstege 16 begrenzt.

Zur Verbindung der Befestigungsplatte 9 mit dem Streifenbelüfter 1 wird die Befestigungsplatte 9 mit ihren Eingriffsflanschen 15 auf die Fußflansche 14 der Streifenbelüfter 1 aufgeschoben. Dabei dienen die Außenstege 16 als Führung. Gleichzeitig sorgen sie für einen sicheren Halt der Befestigungsplatte 9 am Streifenbelüfter 1. Da zwischen den Fußflanschen 14 und den Eingriffsflanschen 15 nur eine formschlüssige Verbindung besteht, kann die Befestigungsplatte 9 problemlos längs des Streifenbelüfters 1 verschoben werden, um sie auf die im Klärbeckenboden verankerten Schraubenbolzen 12 auszurichten, damit diese von den Langlöchern 11 aufgenommen werden können.

Wie insbesondere aus Fig. 1 hervorgeht, ist die Länge L der Befestigungsplatten 9 größer als der Abstand zwischen zwei Streifenbelüftern 1 einer Belüfterkette. Dadurch kann eine Befestigungsplatte für die Befestigung von zwei Streifenbelüftern 1 am Klärbeckenboden verwendet werden.

## Patentansprüche

1. Vorrichtung zum Befestigen eines Streifenbelüfters (1) am Boden eines Klärbeckens, wobei die Vorrichtung aufeinanderfolgende Streifenbelüfter (1) als Belüfterkette sowie eine Befestigungsplatte (9) umfasst, wobei die Streifenbelüfter (1) an ihren Längsrändern jeweils in einen Fußbereich übergehen, der mit einem L-förmig zur Mitte der Streifenbelüfters (1) abgewinkelten Fußflansch (14) endet, die Breite der Befestigungsplatte (9) größer als die Breite der Streifenbelüfter (1) ist und in ihren, über die Breite der Streifenbelüfter (1) hinausgehenden Bereichen Befestigungsmittel (11) zum Verbinden der Befestigungsplatte (9) mit dem Klärbeckenboden aufweist, wobei die Befestigungsplatte (9) zu den Fußflanschen (14) komplementäre Eingriffsflansche (15) aufweist, die zur Befestigung der Streifenbelüfter (1) am Klärbeckenboden in Eingriff mit den Fußflanschen (14) gebracht sind, **dadurch gekennzeichnet, dass** die Befestigungsplatte (9) eine Länge (L) hat, die den Abstand zwischen zwei in der Belüfterkette aufeinanderfolgenden Streifenbelüftern (1) überbrückt und somit die zwei aufeinanderfolgenden Streifenbelüfter (1) mit lediglich der Befestigungsplatte (9) befestigt sind, wobei die Eingriffsflansche (15) sich über die Länge (L) der Befestigungsplatte (9) erstrecken und die Befestigungsplatte (9) somit formschlüssig entlang der Fußflansche (14) verschiebbar ist zur Ausrichtung der Befestigungsplatte (9) auf im Klärbeckenboden verankerten Befestigungsmitteln (12).

2. Vorrichtung nach Anspruch 1, **dadurch gekennzeichnet, dass** die Befestigungsplatte (9) zusätzlich zu den Eingriffsflanschen (15) einen senkrecht abragenden Außensteg (16) aufweist, der bei montierter Befestigungsplatte (9) an der Außenseite des jeweilig zugeordneten Längsrandes des Streifenbelüfters (1) anliegt.

3. Vorrichtung nach Anspruch 1, **dadurch gekennzeichnet, dass** die Befestigungsplatte (9) aus Kunststoff im Spritzguss- oder Extrusionsverfahren hergestellt ist.

## Claims

1. Device for the securing of a strip diffuser (1) to the bottom of a sedimentation tank, wherein the device comprises successive strip diffusers (1) as a diffuser array as well as a securing plate (9), wherein the strip diffusers (1) on their longitudinal edges in each case pass over into a base region, which terminates in an L-shaped base flange (14) angled towards the centre of the strip diffuser (1), the width of the securing plate (9) is greater than the width of the strip diffusers (1) and in its region going beyond the width of the strip diffuser (1) has securing means (11) for connecting the securing plate (9) to the sedimentation tank bottom, wherein the securing plate (9) has engagement flanges (15) complementary to the base flanges (14), which are brought into engagement with the base flanges (14) in order to secure the strip diffusers (1) on the sedimentation tank bottom, **characterised in that** the security plate (9) has a length (L), which bridges the spacing between two successive strip diffusers (1) in the diffuser array and thus the two successive strip diffusers (1) are secured with only the securing plate (9), wherein the engagement flange (15) extends over the length (L) of the securing plate (9) and the securing plate (9) is moveable positively along the base flange (14) for aligning the securing plate (9) to the securing means (12) anchored in the sedimentation tank bottom.

2. Device according to Claim 1 **characterised in that** the securing plate (9) in addition to the engagement flange (15) has a vertically projecting outer web (16), which with mounted securing plate (9) abuts against the outer side of the respectively assigned longitudinal edge of the strip diffuser (1).

3. Device according to Claim 1 **characterised in that** the securing plate (9) is made from plastic using the injection moulding- or extrusion process.

## Revendications

1. Dispositif de fixation d'un diffuseur d'air à membrane (1) au fond d'un bassin de décantation, le dispositif entourant des diffuseurs d'air à membrane (1) successifs sous forme de chaîne de diffuseurs ainsi qu'une plaque de fixation (9), les diffuseurs d'air à membrane (1) s'étendant au-delà de leurs bords longitudinaux en une partie basse qui se termine par une bride de fixation (14) en L coudée vers le milieu des diffuseurs d'air à membrane (1), la largeur de la plaque de fixation (9) étant supérieure à la largeur des diffuseurs d'air à membrane (1) et présentant dans ses parties débordant de la largeur des diffuseurs d'air à membrane (1) des moyens de fixation (11) pour arrimer la plaque de fixation (9) au fond du bassin de décantation, la plaque de fixation (9) présentant des brides de pression (15) complémentaires aux brides de fixation (14) qui sont installées pour fixer les diffuseurs d'air à membrane (1) sur le fond du bassin de décantation en prise avec les brides de fixation (14), **caractérisé en ce que** la plaque de fixation (9) possède une longueur (L) comblant l'écart entre deux diffuseurs d'air à membrane (1) consécutifs de la chaîne de diffuseurs et donc que les deux diffuseurs d'air à membrane (1) consécutifs sont fixés uniquement par la plaque de fixation (9), les brides d'attaque (15) couvrant toute la longueur (L) de la plaque de fixation (9) et la plaque de fixation (9) pouvant ainsi coulisser le long des brides de fixation (14) pour ajuster la plaque de fixation (9) sur les moyens de fixation (12) ancrés au fond du bassin de décantation par blocage mécanique.

2. Dispositif selon la revendication 1, **caractérisé en ce que** la plaque de fixation (9) présente en plus des brides de pression (15) une traverse extérieure verticale placée contre le côté extérieur du bord longitudinal du diffuseur d'air à membrane (1) concerné quand la plaque de fixation (9) est installée.

3. Dispositif selon la revendication 1, **caractérisé en ce que** la plaque de fixation (9) est en matériau synthétique fabriqué par injection ou par extrusion.
